(19) Europäisches Patentamt

European Patent Office

Office européen des brevets

(11) **EP 0 584 482 B1**

(12) **EUROPÄISCHE PATENTSCHRIFT**

(45) Veröffentlichungstag und Bekanntmachung des Hinweises auf die Patenterteilung:
**04.03.1998 Patentblatt 1998/10**

(51) Int Cl.6: **G01S 15/89**

(21) Anmeldenummer: **93109929.5**

(22) Anmeldetag: **22.06.1993**

(54) **Verfahren zum Ermitteln und Anzeigen der Präzision von Tiefenmesswerten**

Method for detecting and displaying the precision of measured depth values

Méthode de détection et d'affichage de la précision de valeurs de profondeur mesurées

(84) Benannte Vertragsstaaten:
**DE DK FR**

(30) Priorität: **28.08.1992 DE 4228620**

(43) Veröffentlichungstag der Anmeldung:
**02.03.1994 Patentblatt 1994/09**

(73) Patentinhaber: **Harre, Ingo**
**28329 Bremen (DE)**

(72) Erfinder: **Harre, Ingo**
**28329 Bremen (DE)**

(74) Vertreter:
**Schulz, Klaus, Patentassessor, Dipl.-Ing. et al**
**c/o STN Atlas Elektronik GmbH,**
**Patentabteilung**
**28305 Bremen (DE)**

(56) Entgegenhaltungen:
EP-A- 0 140 258          GB-A- 2 018 993
US-A- 4 207 620          US-A- 5 122 990

• PATENT ABSTRACTS OF JAPAN vol. 9, no. 76 (P-346) 5. April 1985 & JP-A-59 208 480 (FURUNO DENKI K.K) 26. November 1984

**Beschreibung**

Die Erfindung betrifft ein Verfahren zum Ermitteln und Anzeigen der Präzision von Tiefenmeßwerten eines Fächerlots der im Oberbegriff des Anspruchs 1 angegebenen Art.

Auf Forschungs- und Vermessungsschiffen werden Fächerlote eingesetzt, die der Kartierung und Exploration von Gewässern dienen. Dabei wird von den Fächerloten, die unterhalb der Schiffe angeordnet sind, ein bis zu 90° großer Winkelsektor erfaßt und gleichzeitig vermessen. In diesen Winkel sektor werden Ultraschallimpulse eng gebündelt abgestrahlt und von den Empfangseinrichtungen mit einer fächerförmigen Richtcharakteristik in einer Vielzahl einzelner schmaler Sektoren wieder empfangen. Da die überwiegende Anzahl der Empfangsrichtungen nicht senkrecht, sondern schräg nach unten ausgerichtet sind, unterliegen die Tiefenmeßwerte unterschiedlichen Fehlermöglichkeiten,. die beispielsweise durch die Schallstrahlbeugung, flächenhafte Streuung der Lotimpulse oder unterschiedliche Größen der Bodenflächenelemente, auf die die Ultraschallimpulse auftreffen. Derartige systematische Meßfehler können vergleichsweise einfach korrigiert werden und wirken sich dann nicht mehr auf die Lotergebnisse aus. So ist aus der deutschen Offenlegungsschrift DE 33 38 050 ein Verfahren zur Vermessung eines Meeresbodenprofils mit einem Fächerlot bekannt, bei dem die sich durch die Schallbeugung ergebenden Verzerrungen des Meeresbodenprofils durch eine zusätzliche Eichmessung erfaßt und ausgeglichen wird. Auch dieses Verfahren arbeitet fortlaufend und ohne Unterbrechung des Vermessungsvorganges und ermittelt Eichwerte aufgrund von Meßwerten im lotrechten Empfangsstrahl, aufgrund derer die tatsächlichen momentanen mittleren Schallgeschwindigkeiten, die zur Berechnung der genauen Tiefenmeßwerte erforderlich sind, korrigiert werden.

Zusätzlich zu den so korrigierbaren systematischen Fehlern aufgrund von Ausbreitungseigenschaften der Ultraschallsignale ergeben sich Unterschiede bei den Tiefenmeßwerten, die durch sehr stark strukturierte Meeresbodenprofile hervorgerufen werden. So können neben ausgedehnten ebenen Meeresbodenprofilen ansteigende oder abfallende Hangprofile oder auch stark wellenförmige Profile mit erheblichen Wellenhöhen vorhanden sein. Derartige Tiefenmeßwerte weisen dann zueinander erhebliche Unterschiede auf, die mit dem bekannten Verfahren weder korrigiert werden können und auch nicht korrigiert werden sollen, solange sie nicht meßfehlerbehaftet sind. Die aus dem Stand der Technik bekannten Verfahren sind daher nicht geeignet, zwischen realen Änderungen der Tiefenmeßwerte und Meßfehlern zu unterscheiden.

Der Erfindung liegt daher die Aufgabe zugrunde, ein Beurteilungsmaß für die Präzision von Tiefenmeßwerten zu schaffen und zusammen mit den Tiefenmeßwerten anzuzeigen.

Die Aufgabe wird bei einem Verfahren zum Ermitteln und Anzeigen der Präzision von Tiefenmeßwerten der im Oberbegriff des Anspruchs 1 angegebenen Art durch die Merkmale im Kennzeichenteil des Anspruchs 1 gelöst.

Bei Fächerloten ist die Präzision insbesondere vom Abstrahlwinkel, dem auch die Empfangsrichtung gleichzusetzen ist, abhängig. Mit zunehmendem Abstrahlwinkel wird die Auftrefffläche des Schallkegels auf den Boden größer, wodurch die Fluktuation der Tiefemessung zunimmt. Da für die Genauigkeit von Tiefenmessungen internationale Grenzwerte bestehen, ist es zur Aufstellung eines Fehlerbudgets und damit zur Beurteilung der gesamten Messung notwendig, die Präzision eines jeden Fächerstrahls zu kennen.

Bei dem erfindungsgemäßen Verfahren werden zur Beurteilung der Präzision nur eine begrenzte Anzahl von Tiefenmeßwerten berücksichtigt. Damit ist es bereits möglich, während der Meßfahrt bei der aktuellen Auswertung mit einer sehr geringen Verzögerung schon eine Abschätzung über die Qualität der aktuellen Meßergebnisse zu gewinnen. Diejenigen "Meßwertausrutscher", die sich von dem nebenliegenden Tiefenmeßwerten signifikant unterscheiden, werden auch hier erkannt, hingegen wird vermieden, einen Referenzwert durch eine Mittelung über eine Vielzahl oder die Gesamtheit der Tiefenmeßwerte zu bilden, bei dem reale Unebenheiten des Mehresbodens, wie Hanglagen oder Wellenbildungen, einen unnötig stark ausgeglichenen Referenzwert ergeben würden. D. h., insbesondere bei hangförmigen oder wellenförmigen Meeresbodenprofilen korreliert der Referenzwert des erfindungsgemäßen Verfahren erheblich besser mit den realen Tiefenmeßwerten.

Weitere Vorteile des erfindungsgemäßen Verfahrens ergeben sich aus den Unteransprüchen.

Die Erfindung wird nunmehr anhand eines in der Zeichnung dargestellten Ausführungsbeispiels näher erläutert. Es zeigen:

Fig. 1    Blockschaltbild einer Auswerteschaltung zum Bestimmen des Maßes der Präzision von Tiefenmeßwerten,

Fig. 2    Bildauszug einer Anzeige.

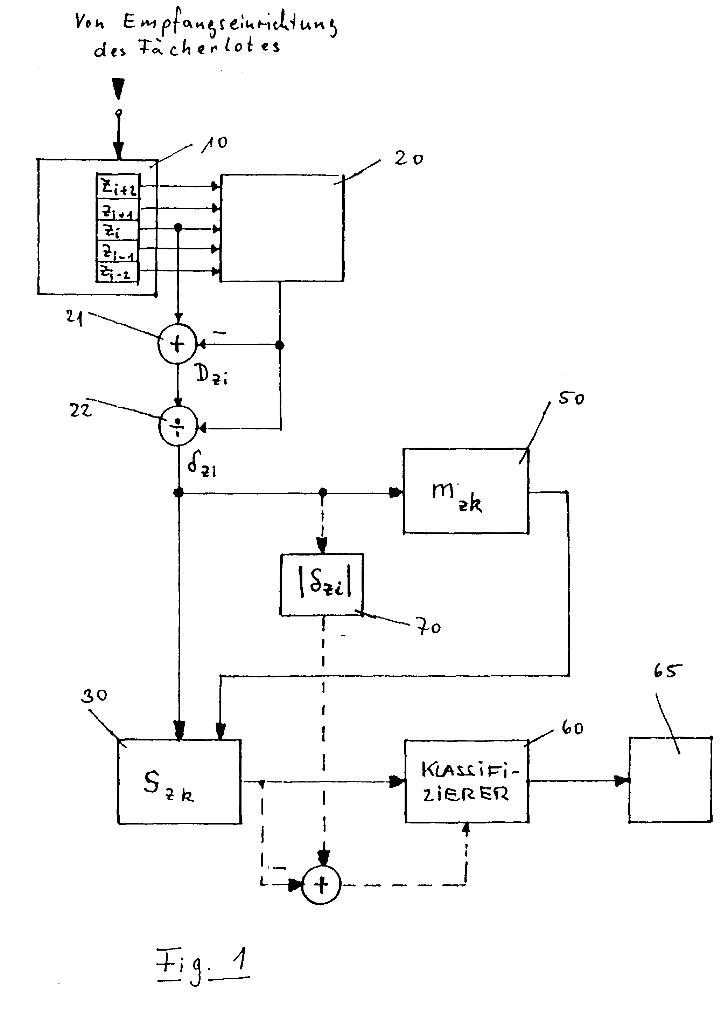

In Fig. 1 ist das Blockschaltbild einer Auswerteschaltung eines Fächerlotes dargestellt, mit dem ein Maß für die Präzision der Tiefenmeßwerte ermittelt und einer Anzeige zugeführt wird. Ein solches Fächerlot spannt seinen Fächer aus Fächerstrahlten in ca. 60 Empfangssektoren oder Empfangsrichtungen unterhalb des Fahrzeugs quer zu seiner Fahrtrichtung auf. Für jede einzelne Empfangsrichtung wird die Laufzeit eines Sendeimpulses bestimmt, bezüglich Empfangswinkel und bekannten Schallausbreitungsdaten korrigiert und ein Tiefenmeßwert z berechnet, der einer weiteren Auswertung unterworfen wird.

Die Tiefenmeßwerte z des Fächerlotes werden dazu in einem Speicher 10 abgelegt. Adressierung und Steuerung derartiger Speicher sind vielfältig und fachmännisch, so daß die entsprechenden Details hier unberücksichtigt bleiben können. Beispielhaft sind fünf Speicherzellen mit den Tiefenmeßwerten $z_{i+2}$, $z_{i+1}$, $z_i$, $z_{i-1}$ und $z_{i-2}$ zur weiteren Beschreibung des erfindungsgemäßen Verfahrens dargestellt. Von der Gesamtheit der gespeicherten Tiefenmeßwerte z des vermessenen Gewässerbodens ist $z_i$ derjenige Tiefenmeßwert, der im Verlauf der Aufbereitung der Meßwerte als aktueller Wert zu beurteilen ist, d. h. für den das zugeordnete Maß der Präzision zu ermitteln ist. Dieser aktuelle Tiefenmeßwert $z_i$ und die Tiefenmeßwerte $z_{i-1}$, $z_{i-2}$, die vorher abgespeichert worden sind, sowie die gleiche Anzahl nachfolgend gespeicherter Tiefenmeßwerte $z_{i+1}$, $z_{i+2}$ werden der Recheneinrichtung 20 zur Bildung eines Referenzwertes zugeführt. In der einfachsten Form bildet die Recheneinheit 20 aus den Tiefenmeßwerten den arithmetischen Mittelwert, so daß am Ausgang ein Referenzwert $z_{ri}$

$$z_{ri} = \frac{1}{N} \sum_{n=p}^{q} z_n$$

mit N = Anzahl der ausgewählten Speicherzellen

p = i - (N-1)/2
q = i + (N-1)/2

ansteht, der dem aktuellen Tiefenmeßwert $z_i$ zugeordnet ist. Die Mittelung erfolgt hier quasi symmetrisch zum aktuellen, verarbeiteten Tiefenmeßwert $z_i$ mit einer verhältnismäßig geringen Anzahl N Werten aus seiner Umgebung, um Einflüsse entfernterer Tiefenwerte z auszuschalten, wobei statt der exemplarisch gewählten fünf Meßwerte auch eine geringere oder etwas höhere Anzahl, z. B. N = 3 oder N = 7, verarbeitet werden kann.

Zur Bildung des Referenzwertes $z_{ri}$ werden aus dem Speicher 10 diejenigen Tiefenmeßwerte $z_i$ verwendet, die in zeitlicher Reihenfolge eingeschrieben worden sind. D.h. die Tiefenmeßwerte $z_{i+2}$ bis $z_{i-2}$ sind alle im gleichen Empfangssektor und somit im gleichen Fächerstrahl des Fächerlotes in Fortbewegungsrichtung des Fahrzeugs zeitlich nacheinander aufgenommen worden. Der Index i-2 bis i+2 kennzeichnet daher eine Zeitachse.

Mit den Referenzwert $z_{ri}$ und dem aktuellen Tiefenmeßwert $z_i$ wird ein Addierer 21 angesteuert, der einen negativen Eingang für den Referenzwert $z_{ri}$ aufweist und die Fehlerdifferenz $D_{zi}$

$$D_{zi} = z_i - z_{ri}$$

bildet. Die Fehlerdifferenz $D_{zi}$ wird im Dividierer 22 durch den Referenzwert $z_{ri}$ geteilt und ergibt den relativen Meßfehler $\delta_{zi}$. Der relative Meßfehler $\delta_{zi}$ wird einerseits einem Modul 30 zum Ermitteln der Standardabweichung $s_{zk}$ sowie andererseits einem Mittelwertrechner 50 zum Bestimmen des Meßfehlermittelwertes $m_{zk}$ zugeführt. Der Meßfehlermittelwert $m_{zk}$ wird fortlaufend gemäß

$$m_{zk} = \frac{1}{k} \sum_{n=1}^{k} \delta_{zn} \qquad \text{mit } k = 1.....i$$

ermittelt und berücksichtigt somit auch Fehlerdifferenzen $D_{zi}$ über größere Meßwertintervalle. Er sollte im statistischen Mittel Null sein. Mit diesem Meßfehlermittelwert $m_{zk}$ wird aufgrund eines geeigneten Algorithmus zur Berechnung von Standardabweichungen bei fortlaufender Messung die Standardabweichung $s_{zk}$

EP 0 584 482 B1

$$s_{zk} = \left( \frac{\sum_{n=1}^{k} (\delta_{zn})^2 - k (m_{zk})^2}{k - 1} \right)^{\frac{1}{2}} \qquad \text{mit } k = 1.....i$$

berechnet. Die Standardabweichung $s_{zk}$ für $k = i$ ist dann bereits ein Maß für die Präzision des Tiefenmeßwertes $z_i$ und wird mit diesen zusammen angezeigt.

In einer anderen Ausführungsform des Verfahrens können auch Speicherzellen von Tiefenmeßwerten $z_i$ ausgewählt werden, die für im Fächer des Lotes nebeneinanderliegende Fächerstrahlen beschrieben worden sind. D.h., daß quasi gleichzeitig quer zur Fortbewegungsrichtung des Vermessungsfahrzeugs gemessene Tiefenmeßwerte $z_i$ zur Referenzwertbildung benutzt werden, die für nebeneinanderliegende Empfangsrichtungen bestimmt worden sind. Bei einer derartigen Verarbeitung stellen die Indizes i-2 bis i+2 dann räumliche Koordinaten der Fächerausdehnung dar.

Ebenso können statt der arithmetischen Mittelung zur Bestimmung des Referenzwertes $z_{ri}$ auch ohne weiteres Regressionsverfahren oder Polynomapproximationen unter Berücksichtigung der vorgegebenen Zahl von umgebenden Tiefenmeßwerten $z_{i-2}$, $z_{i-1}$, $z_{i+1}$, $z_{i+2}$ herangezogen werden.

In einer weiteren Ausgestaltung der Erfindung, die in Fig. 1 bereits dargestellt ist, wird dem Modul 30 ein Klassifizierer 60 nachgeschaltet, der zum Bestimmen des Maßes der Präzision ein oder mehrere vorgebbare Schwellenwerte gespeichert hat. Durch Vergleich der Standardabweichung $s_{zk}$ mit diesen Schwellenwerten werden Güteklassen der Tiefenmeßwerte in mehreren Abstufungen vorgegeben, so daß die Tiefenmeßwerte $z_i$ zusammen mit diesen Güteklassen als Maß der Präzision anzeigbar sind. In der einfachsten Form mit zwei Güteklassen kann dann eine Gut/Schlecht-Entscheidung angezeigt werden. Mit einer größeren Anzahl von Schwellenwerten wird eine im Detail abgestufte Klassifizierung bereitgestellt.

In einer weiteren Ausgestaltung der Erfindung gemäß den in Fig. 1 gestrichelt dargestellten Signallinien wird der relative Meßfehler $\delta_{zi}$ einem Betragsrechner 70 zugeführt, der ausgangsseitig mit einer Addierstufe 71 verbunden ist. Die Addierstufe 71 weist einen invertierenden Eingang auf, der mit dem Modul 30 zur Übernahme der Standardabweichung $s_{zk}$ verbunden ist. Ausgangsseitig ist die Addierstufe 71 mit dem Klassifizierer 60 verbunden. Durch das Ausgangssignal der Addierstufe 71 werden die Schwellenwerte im Klassifizierer 60 nachgeregelt und an den Meßverlauf adaptiert.

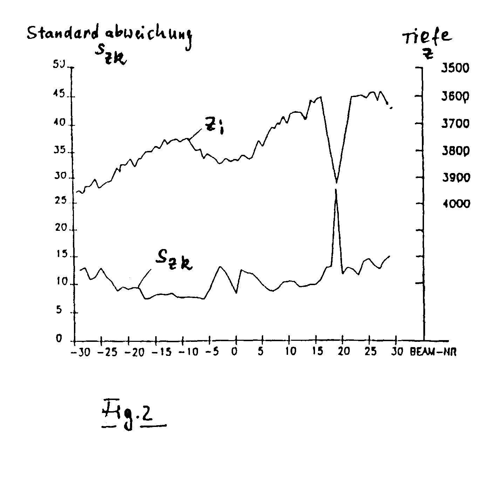

Ein Bildauszug einer Anzeige 65 der Auswerteschaltung gemäß Fig. 1 ist in Fig. 2 dargestellt. Darin ist die Abszissenachse durch die Ordnungszahl der Empfangsrichtung, die sog. Beam-Nr., also für räumliche Koordinaten, gekennzeichnet. Negative Zahlen bezeichnen backbordseitige Empfangssektoren, positive Zahlen steuerbordseitige. Es sind zwei Skalierungen für die Ordinate der Darstellung angegeben, die den entsprechenden Kurvenzügen für die Standardabweichung $s_{zk}$ und die Tiefenmeßwerte $z_i$ zuzuordnen sind. Durch die Tiefenmeßwerte $z_i$ wird eine Gewässerbodenprofil wiedergegeben, das offensichtlich einen im wesentlichen schrägen, hangförmigen Verlauf quer zur Fahrtrichtung des Vermessungsfahrzeugs aufweist, mit einer auffälligen Spitze des Tiefenmeßwertes bei Beam-Nr. 19. Der mittlere Verlauf der Standardabweichung $s_{zk}$ ist zur Abszissenachse hin leicht gebogen. Die grundsätzlich erhöhten Werte für die höheren Beam-Nummern sind verfahrensbedingt und für Fächerlote bekannt. Auffällig ist ebenfalls die erhöhte Standardabweichung $s_{zk}$ für Beam-Nr. 19 mit der Schlußfolgerung einer gegenüber allen anderen Tiefenmeßwerten $z_i$ erheblichen Meßunsicherheit. Durch die unmittelbare Gegenüberstellung von Tiefenmeßwerten $z_i$ und Standardabweichung $s_{zk}$ als Maß für die Präzision der Tiefenmessung wird die Beurteilung der Meßergebnisse erheblich verbessert.

**Patentansprüche**

1. Verfahren zum Ermitteln und Anzeigen der Präzision von Tiefenmeßwerten eines Fächerlotes, dessen Lotfächer quer zur Fahrtrichtung eines Schiffes ausgerichtet ist und dessen Lotungen in einzelnen Fächerstrahlen in Tiefenmeßwerte eines Meeresbodenprofils umgerechnet und in der Reihenfolge der Fächerlotsequenzen gespeichert werden, dadurch gekennzeichnet, daß mit dem zu beurteilenden Tiefenmeßwert $z_i$ und jeweils einer gleichen, im Verhältnis zur Gesamtzahl der Fächerstrahlen geringen, Anzahl vorhergehend und nachfolgend gespeicherter Tiefenmeßwerte $z_{i-2}$, $z_{i-1}$, $z_{i+1}$, $z_{i+2}$ ein Referenzwert $z_{ri}$ gebildet wird, daß für jeden Tiefenmeßwert $z_i$ eine Fehlerdifferenz $D_{zi}$ zum Referenzwert $z_{ri}$ und mit der Fehlerdifferenz $D_{zi}$ ein auf den Referenzwert $z_{ri}$ bezogener relativer Meßfehler $\delta_{zi}$ bestimmt wird, daß fortlaufend aus den relativen Meßfehlern $\delta_{zi}$ ein Meßfehlermittelwert $m_{zk}$ und

4

damit eine jedem Tiefenmeßwert $z_i$ zugeordnete Standardabweichung $s_{zk}$ des Meßfehlers $\delta_{zi}$ berechnet wird und daß der Tiefenmeßwert $z_i$ zusammen mit der Standardabweichung $s_{zk}$ als Maß der Präzision angezeigt wird.

2. Verfahren nach Anspruch 1, dadurch gekennzeichnet, daß die zur Bildung des Referenzwerts $z_{ri}$ ausgewählten Tiefenmeßwerte $z_{i-2}$ bis $z_{i+2}$ bei zeitlich aufeinanderfolgenden Lotungen im gleichen Fächerstrahl ermittelt worden sind.

3. Verfahren nach Anspruch 1, dadurch gekennzeichnet, daß der Referenzwert $z_{ri}$ aus Tiefenmeßwerten $z_i$ nebeneinander liegender Fächerstrahlen gebildet wird.

4. Verfahren nach einem der Ansprüche 1 bis 3, dadurch gekennzeichnet, daß die Standardabweichung $s_{zk}$ in einem Klassifizierer (60) mit einem oder mehreren die Präzision vorgebenden Schwellenwerten verglichen wird und daß der Schwellenwert das Maß der Präzision bildet.

5. Verfahren nach einem oder mehreren der Ansprüche 1 bis 4, dadurch gekennzeichnet, daß der Schwellenwert als Differenz zwischen dem Betrag des relativen Meßfehlers $\delta_{zi}$ und der Standardabweichung $s_{zk}$ bestimmt wird.

6. Verfahren nach einem oder mehreren der Ansprüche 1 bis 5, dadurch gekennzeichnet, daß die Anzeige der Tiefenmeßwerte $z_i$ und des zugehörigen Maßes der Präzision auf einer graphischen Anzeigevorrichtung als Kurvenzüge mit der Fächerstrahlnummer als unabhängiger Variabler vorgenommen wird.

7. Verfahren nach einem oder mehreren der Ansprüche 1 bis 6, dadurch gekennzeichnet, daß der Referenzwert $z_{ri}$ durch arithmetische Mittelung der Tiefenmeßwerte $z_{i-2}$ bis $z_{i+2}$ gewonnen wird.

8. Verfahren nach einem der Ansprüche 1 bis 7, dadurch gekennzeichnet, daß der Referenzwert $z_{ri}$ durch Bestimmen der Regressionsgeraden für die Tiefenmeßwerte $z_{i-2}$ bis $z_{i+2}$ gewonnen wird.

9. Verfahren nach einem der Ansprüche 1 bis 8, dadurch gekennzeichnet, daß der Referenzwert $z_{ri}$ durch Bestimmen eines Polynoms der (2n-3). Ordnung für die Tiefenmeßwerte $z_i$ gewonnen wird, wobei n die Anzahl der berücksichtigten Tiefenmeßwerte $z_i$ angibt.

10. Vorrichtung zum Ausüben des Verfahrens nach einem oder mehreren der Ansprüche 1 bis 9, dadurch gekennzeichnet, daß dem Speicher (10) des Fächerlots für Tiefenmeßwerte $z_i$ eine Recheneinrichtung (20) zum Bilden des Referenzwertes $z_{ri}$ nachgeschaltet ist, daß einem Addierer (21) der aktuelle Tiefenmeßwert $z_i$ und der Referenzwert $z_{ri}$ zuführbar sind, daß dem Addierer (21) ein Dividierer (22) nachgeschaltet ist, der ebenfalls mit der Recheneinrichtung (20) verbunden ist, daß der Dividierer (22) mit einem Mittelwertrechner (50) verbunden ist, daß ein Modul (30) zum Bestimmen der Standardabweichung $s_{zk}$ vorgesehen ist, der dem Dividierer (22) und dem Mittelwertrechner (50) nachgeschaltet ist, und daß der Modul (30) ausgangsseitig mit einer Anzeige (65) verbunden ist.

11. Vorrichtung nach Anspruch 10, dadurch gekennzeichnet, daß zwischen dem Modul (30) und der Anzeige (65) ein Klassifizierer (60) vorgesehen ist.

12. Vorrichtung nach einem der Ansprüche 10 oder 11, dadurch gekennzeichnet, daß dem Dividierer (22) ein Betragsrechner (70) nachgeschaltet ist, daß eine Addierstufe (71) eingangsseitig mit dem Betragsrechner (70) und dem Modul (30) sowie ausgangsseitig mit dem Klassifizierer (60) verbunden ist.

## Revendications

1. Procédé d'évaluation et d'affichage de la précision de valeurs bathymétriques d'une sonde en éventail dont l'éventail est orienté transversalement au sens de marche du bâtiment et dont les sondages sur les différents faisceaux en éventail sont convertis en valeurs bathymétriques d'un profil de fond marin et mémorisés dans l'ordre des séquences de sondage en éventail; caractérisé en ce qu'une valeur de référence $z_{ri}$ est établie à partir de la valeur bathymétrique $z_i$ à évaluer et d'un nombre chaque fois égal, peu important par rapport au nombre total des faisceaux en éventail, de valeurs bathymétriques $z_{i-2}$, $z_{i-1}$, $z_{i+1}$ et $z_{i+2}$ préalablement et postérieurement mémorisées; que, pour chaque valeur bathymétrique $z_i$, une différence d'erreur $D_{zi}$ est déterminée par rapport à la valeur de référence $z_{ri}$, cette différence d'erreur $D_{zi}$ étant utilisée pour déterminer une erreur de mesure relative $\delta_{zi}$ se référant

à la valeur de référence $z_{ri}$; que, d'une façon continue, une moyenne d'erreurs de mesure $m_{zk}$ est calculée à partir des erreurs de mesure relatives $\delta_{zi}$ et utilisée pour déterminer un écart type $s_{zk}$ de l'erreur de mesure $\delta_{zi}$ associé à chaque valeur bathymétrique $z_i$ et que la valeur bathymétrique $z_i$ est affichée conjointement avec l'écart type $s_{zk}$ en tant que valeur de précision.

2. Procédé suivant la revendication 1, caractérisé en ce que les valeurs bathymétriques $z_{i-2}$ et $z_{i+2}$ retenues pour établir la valeur de référence $z_{ri}$ ont été déterminées par des sondages chronologiques sur le même faisceau en éventail.

3. Procédé suivant la revendication 1, caractérisé en ce que la valeur de référence $z_{ri}$ est établie à partir de valeurs bathymétriques $z_i$ sur faisceaux en éventail juxtaposés.

4. Procédé suivant l'une quelconque des revendications 1 à 3, caractérisé en ce que l'écart type $s_{zk}$ est comparé dans un classificateur (60) avec une ou plusieurs valeurs de seuil prédéfinissant la précision et que la valeur de seuil constitue la valeur de précision.

5. Procédé suivant l'une quelconque ou plusieurs des revendications 1 à 4, caractérisé en ce que la valeur de seuil est déterminée en tant que différence entre la valeur absolue de l'erreur de mesure relative $\delta_{zi}$ et l'écart type $s_{zk}$.

6. Procédé suivant l'une quelconque ou plusieurs des revendications 1 à 5, caractérisé en ce que l'affichage des valeurs bathymétriques $z_i$ et de la valeur de précision associée s'effectue sur une unité d'affichage graphique sous forme de courbes représentatives avec le numéro du faisceau en éventail comme variable indépendante.

7. Procédé suivant l'une quelconque ou plusieurs des revendications 1 à 6, caractérisé en ce que la valeur de référence $z_{ri}$ est obtenue par moyennage arithmétique des valeurs bathymétriques $z_{i-2}$ à $z_{i+2}$.

8. Procédé suivant l'une quelconque des revendications 1 à 7, caractérisé en ce que la valeur de référence $z_{ri}$ est obtenue par détermination de la droite de régression pour les valeurs bathymétriques $z_{i-2}$ à $z_{i+2}$.

9. Procédé suivant l'une quelconque des revendications 1 à 8, caractérisé en ce que la valeur de référence $z_{ri}$ est obtenue par la détermination d'un polynôme du $(2n-3)^e$ ordre pour les valeurs bathymétriques $z_i$, n étant le nombre des valeurs bathymétriques $z_i$ prises en compte.

10. Dispositif pour l'application du procédé suivant l'une quelconque ou plusieurs des revendications 1 à 9, caractérisé en ce qu'une unité de calcul (20) destinée à établir la valeur de référence $z_{ri}$ est branchée en aval de la mémoire (10) de la sonde en éventail pour les valeurs bathymétriques $z_i$; que la valeur bathymétrique $z_i$ actuelle et la valeur de référence $z_{ri}$ peuvent être entrées dans un additionneur (21); qu'un diviseur (22) également lié à l'unité de calcul (20) est branché en aval de l'additionneur (21); que le diviseur (22) est lié à un calculateur des moyennes (50); qu'un module (30) destiné à déterminer l'écart type $s_{zk}$ est prévu en aval du diviseur (22) et du calculateur des moyennes (50) et que la sortie du module (30) est liée à un indicateur (65).

11. Dispositif suivant revendication 10, caractérisé en ce qu'un classificateur (60) est prévu entre le module (30) et l'indicateur (65).

12. Dispositif suivant l'une quelconque des revendications 10 ou 11, caractérisé en ce qu'un calculateur de valeur absolue (70) est branché en aval du diviseur (22); qu'une étage d'addition (71) est liée, du côté de son entrée, au calculateur de valeur absolue (70) et au module (30) et, du côté de sa sortie, au classificateur (60).

## Claims

1. Method of determining and displaying the precision of depth measurement values of a multibeam sweeping echosounder whose fan of beams is positioned perpendicular to the travelling direction of a ship and whose soundings in individual beams of the fan are converted to depth measurement values of a sea bed profile and are stored in the same order as the multibeam sweeping echosounder sequences, characterised in that, with the depth measurement value $z_i$ to be assessed and with in each case an equal and, in proportion to the total number of fan beams, small number of depth measurement values $z_{i-2}$, $z_{i-1}$, $z_{i+1}$, $z_{i+2}$ stored previously and subsequently, a reference value $z_{ri}$ is formed, that for each depth measurement value $z_i$ an error difference $D_{zi}$ relative to the reference

value $z_{ri}$ is determined and with the error difference $D_{zi}$ a relative measurement-error $\delta_{zi}$ relative to the reference value $z_{ri}$ is determined, that from the relative measurement-errors $\delta_{zi}$ a measurement-error mean value $m_{zk}$ and hence for each depth measurement value $z_i$ a standard deviation $s_{zk}$ of the measurement error $\delta_{zi}$ are continuously computed and that the depth measurement value $z_i$ is displayed together with the standard deviation $s_{zk}$ as a measure of the precision.

2. Method in accordance with Claim 1, characterised in that the depth measurement values $z_{i-2}$ to $z_{i+2}$ selected for formation of the reference value $z_{ri}$ have been determined in the same beam of the fan during successive soundings.

3. Method in accordance with Claim 1, characterised in that the reference value $z_{ri}$ is formed from depth measurement values $z_i$ of neighbouring beams of the fan.

4. Method in accordance with one of the Claims 1 to 3, characterised in that the standard deviation $s_{zk}$ is compared in a classifier (60) with one or more threshold values representing the precision and that the threshold value constitutes the measure of the precision.

5. Method in accordance with one or more of the Claims 1 to 4, characterised in that the threshold value is determined as the difference between the absolute value of the relative measurement-error $\delta_{zi}$ and the standard deviation $s_{zk}$.

6. Method in accordance with one or more of the Claims 1 to 5, characterised in that the display of the depth measurement values $z_i$ and of the associated measure of precision is performed on a graphic display device as curves with the number of the fan beam as the independent variable.

7. Method in accordance with one or more of the Claims 1 to 6, characterised in that the reference value $z_{ri}$ is obtained by forming the arithmetic mean of the depth measurement values $z_{i-2}$ to $z_{i+2}$.

8. Method in accordance with one of the Claims 1 to 7, characterised in that the reference value $z_{ri}$ is obtained for the depth measurement values $z_{i-2}$ to $z_{i+2}$ by determination of the regression lines.

9. Method in accordance with one of the Claims 1 to 8, characterised in that the reference value $z_{ri}$ is obtained for the depth measurement values $z_i$ by determination of a polynomial of the (2n-3)th order, where n is the number of depth measurement values $z_i$ taken into account.

10. Device for implementing the method in accordance with one or more of the Claims 1 to 9, characterised in that the memory (10) of the multibeam sweeping echosounder for depth measurement values $z_i$ is followed by a calculating device (20) for forming the reference value $z_{ri}$, that the current depth measurement value $z_i$ and the reference value $z_{ri}$ are feedable to an adder (21), that the adder (21) is followed by a divider (22), which is likewise connected to the calculating device (20), that the divider (22) is connected to a mean value calculator (50), that a module (30) for determination of the standard deviation $s_{zk}$ is provided following the divider (22) and the mean value calculator (50), and that the module (30) is connected on its output side to a display (65).

11. Device in accordance with Claim 10, characterised in that there is a classifier (60) provided between the module (30) and the display (65).

12. Device in accordance with one of the Claims 10 or 11, characterised in that the divider (22) is followed by an absolute value calculator (70), that an adder stage (71) is connected on its input side to the absolute value calculator (70) and to the module (30), and is connected on its output side to the classifier (60).

Von Empfangseinrichtung
des Fächerlotes

Fig. 1

Fig.2